# EUROPEAN PATENT APPLICATION

(11) **EP 2 218 504 A1**
(43) Date of publication of application: **18.08.2010**
(21) Application number: 08851201.7
(22) Date of filing: 20.11.2008
(51) Int. Cl.: B01J 41/02, B01J 49/00, C01F 7/00, C02F 1/42

(54) **METHOD FOR REPLACING INTERLAYER IONS OF HYDROTALCITE-LIKE SUBSTANCE, REGENERATING METHOD, AND APPARATUS FOR REPLACING INTERLAYER IONS**

(30) Priority: 20.11.2007 JP 2007300056
(71) Applicant: JDC Corporation, Tokyo 1078466 (JP)
(72) Inventor: ASAKURA, Takeo, Tokyo 107-8466 (JP); OHNO, Mutsuhiro, Tokyo 107-8466 (JP); KAJIMOTO, Takashi, Tokyo 107-8466 (JP); SUGIYAMA, Syuhei, Tokyo 107-8466 (JP)
(74) Representative: Gille, Christian
(86) International application number: PCT/JP2008/003416
(87) International publication number: WO 2009/066461

(57) **Abstract**

There are provided an interlayer ion replacing method and an interlayer ion replacing apparatus which can efficiently replace the interlayer negative ions of hydrotalcite-like substances. The amount of positive ions which chemically-react with at least one of the interlayer negative ions or substituent negative ions is adjusted to facilitate desorption of the interlayer negative ions adsorbed by the hydrotalcite-like substances or to make the substituent negative ions easily adsorbed by the hydrotalcite-like substances, and the interlayer negative ions are replaced with the substituent negative ions.

## Description

### Technical Field

The present invention relates to an interlayer ion replacing method for hydrotalcite-like substances, and an interlayer ion replacing apparatus.

### Background Art

Hydrotalcite-like substances have a main backbone which is an element present in nature abundantly, such as magnesium or aluminum, and because it can be synthesized relatively easily, various kinds of synthesizing techniques have been proposed. For example, there are proposed a technique of producing hydrotalcite in a water solution using magnesium hydroxide as a magnesium source (see, for example, patent literature 1), and a technique of causing magnesium ions and aluminum ions to react with each other in a water solution under a presence of alkali (see, for example, patent literature 2).

It is also known that hydrotalcite have a negative ion exchanging effect. It is expected that in the fields of safeness improving techniques for waste substances and detoxification environment improving techniques, improvement of the water quality of polluted water, suppression of any elution of harmful substances, improvement of soil, and promotion of stabilization of harmful substances at a waste substance disposal field, etc., can be accomplished if arsenic, fluorine, boron, selenium, hexavalent chrome, nitrite ion, and other negative ion harmful substances are immobilized through the foregoing negative ion exchange effect.

Conversely, hydrotalcite-like substances immobilizing harmful substances require selective desorption of the immobilized harmful substances, or recycling usage of the hydrotalcite-like substances having undergone desoprtion of the harmful substances, so that it is necessary to replace an interlayer negative ions which are the harmful substances immobilized by the hydrotalcite-like substances with substituent negative ions.

Conventionally, replacement is carried out by supplying substituent negative ions having a higher affinity with hydrotalcite-like substances than that of interlayer negative ions which are the immobilized harmful substances, or by putting in a solution containing a large amount of substituent negative ions even if the affinity is low.

Patent Literature 1: JPH06-329410A
Patent Literature 2: JP2003-26418A

### Disclosure of Invention

### Problem to be Solved by the Invention

According to the conventional techniques, however, desorption of harmful substances captured in hydrotalcite-like substances is difficult or desorption requires a lot of time and costs.

Therefore, it is an object of the present invention to provide an interlayer ion replacing method and an interlayer ion replacing apparatus which can efficiently replace interlayer negative ions in hydrotalcite-like substances.

### Means for Solving the Problem

Conventionally, when interlayer negative ions in hydrotalcite-like substances are replaced with substituent negative ions, only an affinity between the hydrotalcite-like substances and negative ions is taken into consideration. However, the inventors of the present invention found out that it is insufficient if only the affinity between the hydrotalcite-like substances and the negative ions is taken into consideration, and it is necessary to adjust the amount of positive ions which chemically-react with at least either interlayer negative ions or substituent negative ions to facilitate desorption of the interlayer negative ions adsorbed by the hydrotalcite-like substances into a solution, or to make the substituent negative ions easily adsorbed by the hydrotalcite-like substances.

That is, an interlayer ion replacing method according to a first aspect of the present invention replaces an interlayer negative ion of a hydrotalcite-like substance in a solution containing a substituent negative ion, the method comprising: a positive ion adjusting step of increasing an amount of positive ion which chemically-reacts with the interlayer negative ion in the solution.

An interlayer ion replacing method according to a second aspect of the present invention replaces an interlayer negative ion of a hydrotalcite-like substance in a solution containing a substituent negative ion, the method comprising: a positive ion adjusting step of decreasing an amount of positive ion which chemically-reacts with the substituent negative ion in the solution.

An interlayer ion replacing method according to a third aspect of the present invention replaces an interlayer negative ion of a hydrotalcite-like substance in a solution containing a substituent negative ion, the method comprising: a positive ion adjusting step of adjusting an amount of positive ion which chemically-reacts with both of the interlayer negative ion and the substituent negative ion in the solution so that a desorption amount of the interlayer negative ion increases.

In those cases, it is appropriate if the hydrotalcite-like substance has a crystallite size of equal to 20 nm or smaller. The positive ion may be a hydrogen ion. It is preferable that the substituent negative ion should have a higher affinity with the hydrotalcite-like substance than an affinity of the interlayer negative ion. The substituent negative ion may be a carbonate ion or a chloride ion. Furthermore, it is preferable that the hydrotalcite-like substance should be kept in a moistening condition after adsorbing the interlayer negative ion until replaced with the substituent negative ion.

A regenerating method according to a fourth aspect of the present invention is of replacing an interlayer negative ion of a hydrotalcite-like substance with a substituent negative ion to regenerate the hydrotalcite-like substance, the regenerating method comprising steps of: replacing the interlayer negative ion of the hydrotalcite-like substance with a carbonate ion through the foregoing interlayer ion replacing method; and replacing the carbonate ion with a chloride ion in a sodium chloride solution having pH between equal to 3 or higher and equal to 7 or lower.

A regenerating method of a hydrotalcite-like substance according to a fifth aspect of the present invention comprises a step of replacing an interlayer negative ion of the hydrotalcite-like substance with a chloride ion in a sodium chloride solution having pH between equal to 3 or higher and equal to 7 or lower.

An interlayer ion replacing apparatus according to a sixth aspect of the present invention replaces an interlayer negative ion of a hydrotalcite-like substance with a substituent negative ion in a solution, the apparatus comprising: positive ion adjusting means for adjusting an amount of positive ion which chemically-reacts with at least either one of the interlayer negative ion or the substituent negative ion.

In this case, the positive ion adjusting means may adjust a concentration of hydrogen ion.

### Effect of the Invention

As the amount of positive ions which chemically-react with at least either interlayer negative ions or substituent negative ions is adjusted to facilitate desorption of the interlayer negative ions adsorbed by hydrotalcite-like substances into a solution or to make the substituent negative ions easily adsorbed by the hydrotalcite-like substances, the desorption ratio of the interlayer negative ions (the ratio of the amount of interlayer negative ions having undergone desorption relative to the amount of interlayer negative ions prior to desorption and adsorbed by the hydrotalcite-like substances) can be improved.

### Brief Description of Drawings

FIG. 1 is a graph showing a relationship between pH and a form of boron;
FIG. 2 is a graph showing a relationship between pH and a form of carbonate ion; and
FIG. 3 is a flowchart showing an example of a regenerating method according to the present invention.

### Best Mode for Carrying Out the Invention

An interlayer ion replacing method of the present invention will be explained below.

The interlayer ion replacing method of the present invention is an interlayer ion replacing method of replacing interlayer negative ions of hydrotalcite-like substances with other negative ions in a solution, and comprises a positive ion adjusting step of adjusting the amount of positive ions which chemically-react with at least either one of the interlayer negative ions or the substituent negative ions so that the desorption ratio of the interlayer negative ions (the ratio of the amount of interlayer negative ions having undergone desorption relative to the amount of interlayer negative ions prior to desorption and adsorbed by the hydrotalcite-like substances) increases.

In the present embodiment, a hydrotalcite-like substance is a kind of non-stoichiometric compound, and is a layered double hydroxide expressed by a chemical formula: M²⁺₁₋ₓM³⁺ₓ(OH)₂(Aⁿ⁻)_{x/n}·mH₂O. M²⁺ represents a divalent metal, such as Mg²⁺, Fe²⁺, Zn²⁺, Ca²⁺, Li²⁺, Ni²⁺, Co²⁺, or Cu²⁺. M³⁺ represents a triad metal, such as Al³⁺, Fe³⁺, or Mn³⁺. Moreover, Aⁿ⁻ represents an anion (where n is the valence of anion). Note that x is a numeric value equal to 0 or greater and equal to 1 or less, and is 0.25 ≤ x ≤ 0.33 for general hydrotalcite-like substances.

An interlayer negative ion means a negative ion adsorbed or immobilized by hydrotalcite-like substances, and is one kind or plural kinds in some cases.

Furthermore, a substituent negative ion means a negative ion for being replaced with the interlayer negative ion of hydrotalcite-like substances through the interlayer ion replacing method of the present invention. Examples of the substituent negative ion are ones having an affinity with hydrotalcite-like substances, such as carbonate ion (CO₃²⁻) or chloride ion (Cl⁻). It is preferable that the substituent negative ion should have a better affinity with hydrotalcite-like substances than that of interlayer negative ions, and for example, carbonate ions can be used appropriately. The kind of substituent negative ion is not limited to one, but plural kinds of substituent negative ions can be used.

The positive ion adjusting step is for adjusting the amount of positive ions which chemically-react with at least either one of the interlayer negative ions or the substituent negative ions in order to facilitate desorption of the interlayer negative ions adsorbed by the hydrotalcite-like substances into a solution or to make the substituent negative ions easily adsorbed by the hydrotalcite-like substances. In this case, the kind of positive ion is not limited to one, but plural kinds of positive ions can be used.

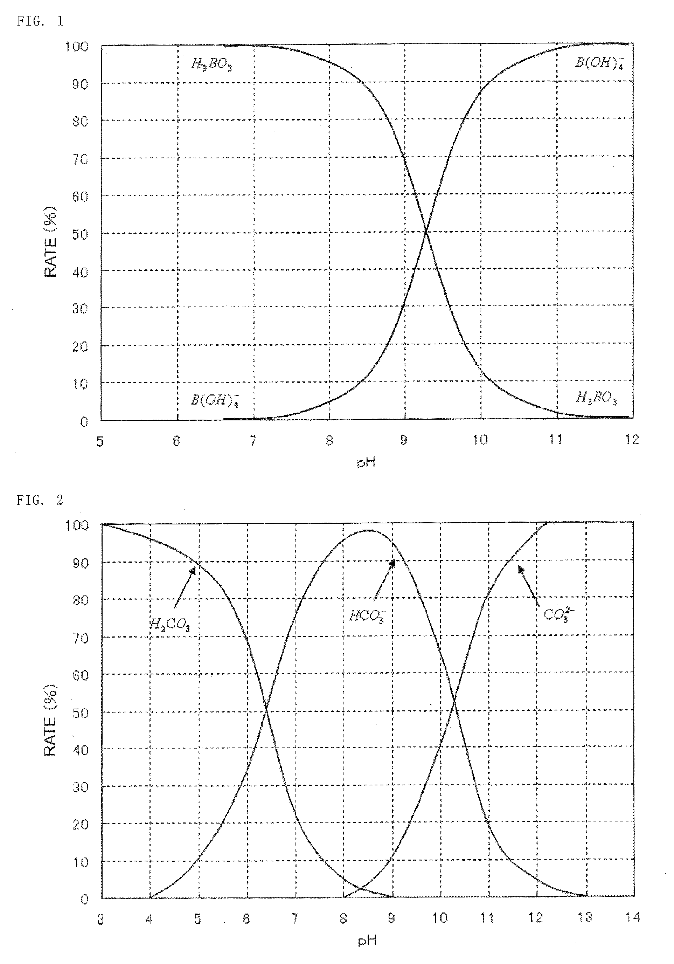

In order to facilitate desorption of the interlayer negative ions adsorbed by the hydrotalcite-like substances into a solution, it is appropriate if the amount of positive ions which chemically-react with the interlayer negative ions is increased in a solution containing the hydrotalcite-like substances. For example, H₃BO₃ and B(OH)₄⁻ in a solution are in a balanced relationship as shown in FIG. 1 in accordance with the amount of positive ions which are hydrogen ions. Accordingly, when B(OH)₄⁻ is adsorbed in the interlayer of the hydrotalcite-like substances, if it is adjusted so that the concentration of hydrogen ions increases, H₃BO₃ is more likely to be present than B(OH)4⁻ regarding boron, so that desorption of B(OH)₄⁻ adsorbed by the hydrotalcite-like substances is facilitated. Moreover, H₂CO₃ and HCO₃²⁻ in a solution are in a balanced relationship as shown in FIG. 2 in accordance with the amount of positive ions which are hydrogen ions. Accordingly, when CO₃⁻ is adsorbed in the interlayer of the hydrotalcite-like substances, if it is adjusted so that the amount of hydrogen ions increases, H₂CO₃ is more likely to be present than CO₃²⁻, so that desorption of CO₃²⁻ which is the interlayer negative ions adsorbed by the hydrotalcite-like substances is facilitated.

In order to make the substituent negative ions easily adsorbed by the hydrotalcite-like substances, it is appropriate if the amount of positive ions which chemically-react with the substituent ions is reduced so that the amount of substituent negative ions present in a solution containing the hydrotalcite-like substances becomes large. For example, as explained above, H₂CO₃, HCO₃⁻, and CO₃²⁻ in a solution are in a balanced relationship as shown in FIG. 2 in accordance with the amount of positive ions which are hydrogen ions. Accordingly, when it is adjusted so that the concentration of hydrogen ions decreases, HCO₃⁻ is more likely to be present than H₂CO₃, and when the concentration of hydrogen ions further decreases, CO₃²⁻ is more likely to be present than HCO₃⁻, so that HCO₃⁻ and CO₃²⁻ which are substituent ions increase, and are likely to be adsorbed by the hydrotalcite-like substances. Note that it is appropriate if negative ions which react with positive ions are supplied in order to decrease the positive ions.

When the positive ions are ones which chemically-react with both interlayer negative ions and substituent negative ions, it is appropriate if adjustment is carried out so that the desorption ratio of the interlayer negative ions becomes highest.

The hydrotalcite-like substances which replace the interlayer negative ions with substituent negative ions as explained above can be regenerated as chlorinated hydrotalcite-like substances by further replacing the interlayer negative ions with chloride ions. For example, when the interlayer negative ions of the hydrotalcite-like substances are replaced with carbonate ions through the foregoing interlayer ion replacing method, if the carbonate ions are replaced with chloride ions in a sodium chloride solution, chlorinated hydrotalcite-like substances can be regenerated. At this time, carbonate ions which are the interlayer negative ions are in a balanced relationship as shown in FIG. 2 in accordance with the amount of positive ions which are hydrogen ions as explained above. Therefore, when pH decreases, H₂CO₃ is more likely to be present than CO₃²⁻, so that the desorption ratio of the carbonate ions can be improved. However, if pH decreases too low, as hydrotalcite-like substances are dissolved, it is preferable to set pH to 3 to 7, preferably, 3 to 5, and more preferably, 3 to 4.

When chloride ions are used as the substituent negative ions, it is preferable because chlorinated hydrotalcite-like substances can be regenerated simultaneously with replacement of the interlayer negative ions.

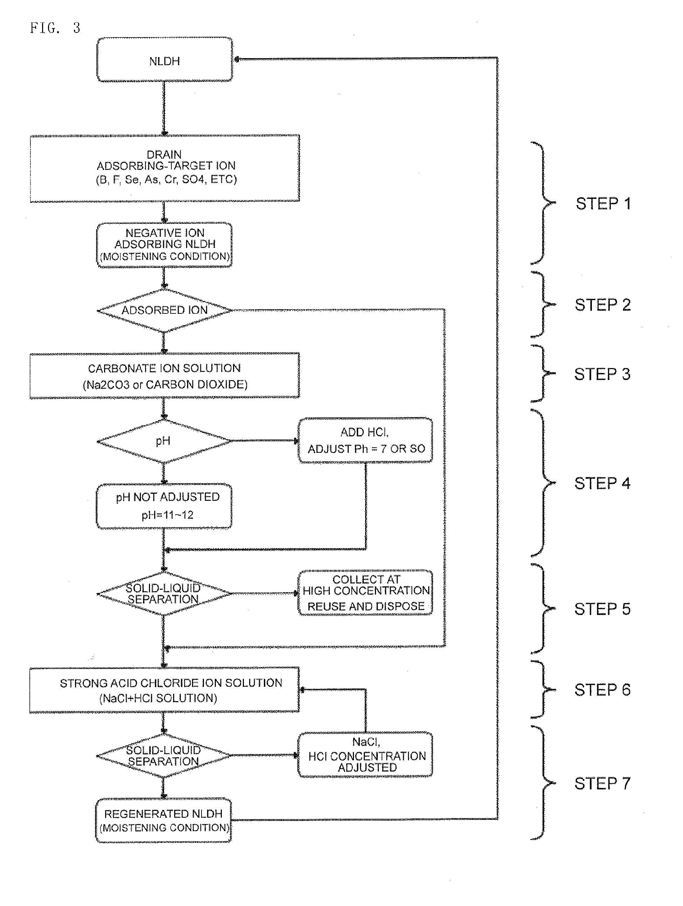

Next, an explanation will be given of an illustrative regenerating method when boron, fluorine, arsenic, chrome, sulfate ions, etc., are adsorbed by hydrotalcite-like substances having a crystallite size of equal to 20 nm or less with reference to the flowchart of FIG. 3.

### <Step 1>

After various substances are adsorbed by hydrotalcite-like substances, the hydrotalcite-like substances are collected in a moistening condition.

### <Step 2>

When the adsorbed substances are boron or arsenic, the process progresses to step 6, and when the adsorbed substances are a mixture of various substances, the process progresses to step 3.

### <Step 3>

The collected hydrotalcite-like substances are mixed with a carbonate ion solution. An example of the carbonate ion solution is an Na₂CO₃ solution or a solution in which carbon dioxide is dissolved.

### <Step 4>

When the substances adsorbed by the hydrotalcite-like substances are mainly boron, pH is adjusted to near 7, and the solution is agitated. When the adsorbed substances are a mixture of various substances, the solution is agitated without adjusting pH or with pH being adjusted to 11 to 12.

### <Step 5>

The solution containing the hydrotalcite-like substances is subjected to solid-liquid separation, and a liquid phase is collected at a high concentration and is reused or disposed. The solid-phase hydrotalcite-like substances are rinsed well by a distilled water, etc., is subjected to solid-liquid separation again, and is collected.

### <Step 6>

The hydrotalcite-like substances are mixed with a solution containing sodium chloride and hydrochloric acid.

### <Step 7>

After the solution containing the hydrotalcite-like substances is subjected to solid-liquid separation, a liquid phase is subjected to pH adjustment by the concentration of sodium chloride or hydrochloric acid, and is reused as a solution in the step 6. The solid-phase hydrotalcite-like substances are rinsed well by a distilled water, etc., and is subjected to solid-liquid separation again, thereby terminating regeneration.

An explanation will be given of examples of the interlayer ion replacing method of the present invention below, but it should be understood that the present invention is not limited to the examples. In the examples, hydrotalcite-like substances adsorbing boron or fluorine were subjected to replacement and regeneration.

### First Example

### <Method of Producing Adsorbing Sample>

As hydrotalcite-like substances, one having a crystallite size of equal to 20 nm or less and represented by a chemical formula [Mg_{5.33}Al_{2.67}(OH)₁₆[Cl_{2.67}·4H₂O] was used.

Adsorption of boron to the hydrotalcite-like substances was carried out through following procedures.
(1) A special grade sample boron (H₃BO₃) was dissolved in distilled water of 1000 ml, and a solution having a boron concentration of 18.56 mg/L was prepared.
(2) NaOH having a normality of 1 N was dropped in the boron solution, and an adsorbing solution having solution pH adjusted to 9 was prepared.
(3) 1.0 wt% (10 g) of powder hydrotalcite-like substances were added to the adsorbing solution, and the solution was stirred for 60 min by a magnetic stirrer.
(4) After the stirring, the solution was subjected to solid-liquid separation, and some of the adsorbing hydrotalcite-like substances having undergone solid-liquid separation were dried by an electric furnace, and a moisture content was measured. At this time, the moisture content was about 5.6 %.
(5) When the boron concentration of the filtrate having undergone solid-liquid separation was measured through an ICP emission spectrophotometer (CIROS CCD made by RIGAKU), it was 3.454 mg/L, so that the adsorbing amount of boron by the hydrotalcite-like substances was 1.511 mg/g. When the moisture content (about 5.6 %) of the hydrotalcite-like substances used for an adsorbing test and a contained salt content (NaCl: about 6.0 %) measured by a salt concentration rafractometer (IS-28E made by ASONE) were taken into consideration, because pure hydrotalcite-like substances (dried and solid content) contained in 1 g of powder hydrotalcite-like substances were 0.88 g, the boron adsorbing amount of 1 g of the pure hydrotalcite-like substances was 1.709 mg/g.
(6) The adsorbing hydrotalcite-like substances were kept in a sealed container in a moistening condition, and used as a sample for recycling test.

Adsorption of fluorine to hydrotalcite-like substances was carried out through following procedures.
(1) 2.210 g of special grade sodium fluoride (NaF) was dissolved in distilled water of 1000 ml, and an adsorbing solution having a fluorine concentration of 998 mg/L was prepared (no pH adjusted).
(2) 1.0 wt% (10 g) of powder hydrotalcite-like substances was added in the adsorbing solution, and the solution was stirred by a magnetic stirrer for 60 min.
(3) After stirred, the solution was subjected to solid-liquid separation, and some of the adsorbing hydrotalcite-like substances having undergone solid-liquid separation were dried by electric furnace, and a moisture content was measured. At this time, the moisture content was about 5.6 %.
(4) When the fluorine concentration of the filtrate having undergone solid-liquid separation was measured through an ICP emission spectrophotometer (CIROS CCD made by RIGAKU), it was 405 mg/L, so that the adsorbing amount of fluorine by the hydrotalcite-like substances was 59.3 mg/g. When the moisture content (about 5.6 %) of the hydrotalcite-like substances used for an adsorbing test and a contained salt content (NaCl: about 6.0 %) measured by a salt concentration rafractometer (IS-28E made by ASONE) were taken into consideration, because pure hydrotalcite-like substances (dried and solid content) contained in 1 g of powder hydrotalcite-like substances were 0.88 g, so that the fluorine adsorbing amount of 1 g of the pure hydrotalcite-like substances was 67.1 mg/g.
(5) The adsorbing hydrotalcite-like substances were kept in a sealed container in a moistening condition, and used as a sample for recycling test.

### <Interlayer Ion Replacing Test>

The interlayer negative ions of the above-explained hydrotalcite-like substances adsorbing boron or fluorine were replaced through following procedures.
(1) Respective solutions were produced by dissolving special grade sodium carbonate (Na₂CO3) in distilled water each 100 ml at 0.848 g (CO₃²⁻ conversion: 8 mmol) and at 1.696 g (CO₃²⁻ conversion: 16 mmol).
(2) HCl having a normality of 1 N was dropped in one of the solutions prepared in (1) to adjust its pH to 7.
(3) 1 g of Hydrotalcite-like substances adsorbing substances were added in the solution having pH adjusted to 7 and the solution having undergone no adjustment (pH = 11 to 12), respectively, and those solutions were stirred by a magnetic stirrer for 30 min.
(4) After stirred, the solutions were subjected to solid-liquid separation, the boron concentration of respective filtrates was measured through an ICP emission spectrophotometer (CIROS CCD made by RIGAKU), the fluorine concentration was measured by an ion electrode (F-2021 made by TOA DKK), and pH was measured by an pH electrode, and the desorption amount of boron from the hydrotalcite-like substances and that of fluorine therefrom were measured.
Table 1 shows a result of replacement of the hydrotalcite-like substances adsorbing boron, and table 2 shows a result of replacement of the hydrotalcite-like substances adsorbing fluorine.

**[Table 1]**

| CASE | CO₂ concentration (/100 ml) | pH | | Boron concentration (mg/L) | Desorption amount (mg/g) | Desorption ratio (%) |
|---|---|---|---|---|---|---|
| | | Initial solution | Filtrate | | | |
| B-1 | 8 mmol | 11.35 | 11.33 | 14.60 | 1.46 | 85.4 |
| B-2 | 8 mmol | 7.07 | 7.98 | 17.50 | 1.75 | 102.4 |
| B-3 | 16 mmol | 11.43 | 11.44 | 14.26 | 1.43 | 83.4 |
| B-4 | 16 mmol | 7.07 | 8.00 | 16.76 | 1.68 | 98.1 |

**[Table 2]**

| CASE | CO₂ Concentration (100 ml) | pH | | Fluorine concentration (mg/L) | Desorption amount (mg/g) | Desorption ratio (%) |
|---|---|---|---|---|---|---|
| | | Initial solution | Filtrate | | | |
| F-1 | 8 mmol | 11.27 | 11.02 | 622 | 62.2 | 92.7 |
| F-2 | 8 mmol | 6.82 | 8.09 | 285 | 28.5 | 42.5 |
| F-3 | 16 mmol | 11.31 | 11.18 | 661 | 66.1 | 98.5 |
| F-4 | 16 mmol | 6.80 | 7.89 | 272 | 27.2 | 40.6 |

As is clear from table 1, the lower the pH is, the more the desorption amount of boron from the hydrotalcite-like substances is. This is because it seems as shown in FIG. 1 that when pH is high, born has a large abundance as B(OH)₄⁻, and is likely to be adsorbed by hydrotalcite-like substances, but when pH is low, boron has a large abundance as H₃BO₃ increased, and is likely to be desorbed from hydrotalcite-like substances.

Conversely, as shown in table 2, the higher the pH is, the more the desorption amount of fluorine from hydrotalcite-like substances is. This is because it seems that the higher the pH is, the more the abundance of CO₃²⁻ which is a substituent negative ion increases, and fluorine ions are likely to be desorbed from hydrotalcite-like substances.

### Second Example

The hydrotalcite-like substances adsorbing boron in the first example and hydrotalcite-like substances adsorbing fluorine in the first example were individually dried by a drying furnace for 24 hours, and were made as powders, and a replacing test of interlayer negative ions were performed on respective powders like the first example. Table 3 shows a result of replacement of the hydrotalcite-like substances adsorbing boron, and table 4 shows a result of replacement of the hydrotalcite-like substances adsorbing fluorine.

**[Table 3]**

| CASE | CO₂ concentration (/100 ml) | pH | | Boron concentration (mg/L) | Desorption amount (mg/g) | Desorption ratio (%) |
|---|---|---|---|---|---|---|
| | | Initial solution | Filtrate | | | |
| B-1(Drying) | 8 mmol | 11.38 | 11.06 | 5.57 | 0.56 | 32.6 |
| B-2(Drying) | 8 mmol | 7.02 | 7.66 | 3.34 | 0.33 | 19.5 |
| B-3(Drying) | 16 mmol | 11.46 | 11.20 | 5.20 | 0.52 | 30.5 |
| B-4(Drying) | 16 mmol | 7.05 | 7.89 | 2.62 | 0.26 | 15.3 |

**[Table 4]**

| CASE | CO₂ concentration (/100 ml) | pH | | Fluorine concentration (mg/L) | Desorption amount (mg/g) | Desorption ratio (%) |
|---|---|---|---|---|---|---|
| | | Initial solution | Filtrate | | | |
| F-1(Drying) | 8 mmol | 11.48 | 11.24 | 38.1 | 3.81 | 5.7 |
| F-2(Drying) | 8 mmol | 7.15 | 8.29 | 20.8 | 2.08 | 3.1 |
| F-3(Drying) | 16 mmol | 11.55 | 11.49 | 47.5 | 4.75 | 7.1 |
| F-4(Drying) | 16 mmol | 7.12 | 8.10 | 19.8 | 1.98 | 3.0 |

When table 1 is compared with table 3, and when table 2 is compared with table 4, once hydrotalcite-like substances adsorbing boron or fluorine were dried, the desorption ratio of interlayer negative ions largely decreases. Accordingly, it is preferable to keep hydrotalcite-like substances in a moistening condition without causing it to be dried until the interlayer negative ions are replaced after the negative ions are adsorbed.

### Third Example

### <Regenerating and Re-adsorbing Test>

Next, hydrotalcite-like substances replaced from a chlorinated type to a carbonated type were regenerated as chlorinated type hydrotalcite-like substances again through following procedures, and adsorbing tests of boron and fluorine were carried out.
(1) 5.0 g and 20.0g of respective special grade sodium chloride (NaCl) were dissolved in respective distilled water of 100 ml, and solutions having a sodium chloride concentration of 5.0 % and 20.-0 % were prepared.
(2) HCl having a normality of 1 N was dropped in respective sodium chloride solutions, and regeneration solutions having pH adjusted to 3 were prepared (see table 5).
(3) 1.0 wt% of carbonate hydrotalcite-like substances (1.0 g: in dried and solid content conversion) were added in the solutions prepared in (2), and the solutions were stirred by a magnetic stirrer for 30 min.
(4) HCl having a normality of 1 N was dropped in the solutions being stirred to adjust pH of the solutions between 3.0 and 5.0.
(5) After stirring, hydrotalcite-like substances having undergone solid-liquid separation and collected were rinsed well by distilled water, and sodium chloride contained therein were eliminated, and the hydrotalcite-like substances were subjected to solid-liquid separation again.
(6) Regenerated hydrotalcite-like substances collected were put in a drying furnace set to 100 °C±5 °C for equal to 12 hours or longer, and used as samples for a re-adsorbing test. The sample for re-adsorption was kept in a sealed container.
(7) A re-adsorbing test was carried out through the same scheme as that of the first example (method of producing adsorbing sample). Table 6 shows the result. Note that a regeneration rate was acquired on percentage from the adsorbing amount of boron by hydrotalcite-like substances after regeneration and that of fluorine with reference to the boron adsorbing amount of hydrotalcite-like substances in the first example which was 1.511 mg/g and the fluorine adsorbing amount thereof which was 59.3 mg/g.

**[Table 5]**

| CASE | Solution amount (ml) | NaCl | | pH | | Added 1 N HCl (ml) |
|---|---|---|---|---|---|---|
| | | wt% | g | Initial solution | Filtrate | |
| 1 | 1000 | 5.0 | 50.0 | 3.04 | 4.45 | 54.0 |
| 2 | 1000 | 20.0 | 200.0 | 3.02 | 4.08 | 54.0 |

**[Table 6]**

| CASE | pH | | Solution concentration (mg/L) | Adsorbing amount (mg/g) | Regeneration rate (%) |
|---|---|---|---|---|---|
| | Initial solution | Filtrate | | | |
| B-5% | 9.03 | 8.38 | 3.24 | 1.56 | 103.5 |
| B-20% | 9.03 | 7.67 | 5.99 | 1.29 | 85.3 |
| F-5% | 7.03 | 10.08 | 459 | 55.1 | 92.9 |
| F-20% | 7.03 | 9.98 | 420 | 59.0 | 99.5 |

As is clear from the result shown in table 6, even hydrotalcite-like substances once becoming a carbonated type is regenerated as a chlorine-type hydrotalcite-like substances with an NaCl solution of 5 % concentration, almost 100 % of a boron adsorbing ability and 90 % of a fluorine adsorbing ability are regenerated, and when it is regenerated as a chlorine-type hydrotalcite-like substances with an NaCl solution of 20 % concentration, 85 % of a boron adsorbing ability and almost 100 % of fluorine adsorbing ability are regenerated.

### Fourth Example

In the first and third examples, hydrotalcite-like substances were once made as a carbonated type, and regenerated as a chlorinated type, but in this example, an explanation will be given of a case in which hydrotalcite-like substances adsorbing boron were simultaneously subjected to interlayer negative ion desorption and regeneration.

In this example, hydrotalcite-like substances adsorbing boron were processed in a solution having pH in an acid region and having a sodium chloride concentration of 25.0 % (CASE B-5), 5.0 % (CASE B-6), and 0 % (CASE B-7), and in a solution having pH in an alkaline region and having a sodium chloride concentration of 25.0 % (CASE B-8), and 5.0 % (CASE B-9).

### <Method of Producing Adsorbing Sample>

As hydrotalcite-like substances, ones having a crystallite size of equal to 20 nm or less and represented by a chemical formula of [Mg_{5.33}Al₂.₆₇(OH)₁₆][Cl_{2.67}·4H₂O] were used.

Adsorption of boron to hydrotalcite-like substances was carried out through following procedures.
(1) Special grade boronic acid (H₃BO₃) was dissolved in distilled water of 1000 ml, and solutions having a boron concentration of 19.3 mg/L (CASE 5 t o7) and of 18.9 mg/L (CASE 8 and 9) were prepared.
(2) NaOH having a normality of 1 N was dropped into the boron solution to prepare an adsorbing solution having pH adjusted to 9.
(3) 1.0 wt% (10 g) of powder hydrotalcite-like substances were added in the adsorbing solution, and the solution was stirred by a magnetic stirrer for 60 min.
(4) After stirred, the solution was subjected to soli-liquid separation, and some of adsorbing hydrotalcite-like substances having undergone solid-liquid separation were dried by an electric furnace, and a moisture content was measured. At this time, the moisture content was about 5.6 %.
When the boron concentration of the filtrates having undergone solid-liquid separation was measured through an ICP emission spectrophotometer (CIROS CCD made by RIGAKU), it was 3.50 mg/L (CASE B-5 to B7) and was 3.56 mg/L (CASE B-8, B-9), so that the boron adsorbing amount of the hydrotalcite-like substances was 1.58 mg/g (CASE B-5 to B-7), and was 1.53 mg/g (CASE B-8, B-9). When the moisture content (about 5.6 %) of the powder hydrotalcite-like substances used for the adsorbing test and a contained salt content (NaCl: about 6.0 %) measured by a salt concentration rafractometer (IS-28E made by ASONE) were taken into consideration, because pure hydrotalcite-like substances (dried and solid content) contained in 1 g of power hydrotalcite-like substances were 0.88 g, the boron adsorbing amount of 1 g of pure hydrotalcite-like substances was 1.787 mg/g (CASE B-5 to B-7) and was 1.730 mg/g (CASE B-8, B-9).
(6) Adsorbing hydrotalcite-like substances were kept in a sealed contained in a moistening condition, and used as a sample for a recycling test.

### <Interlayer Ion Replacing and Regenerating Test>

(1) 5.0 g and 25.0 g of special grade sodium chloride were respectively dissolved in 100 ml of distilled water, and two solutions having a sodium chloride concentration of 25.9 % (for CASE B-5, B-8), two solutions having a sodium chloride concentration of 5.9 % (for CASE B-6, B-9), and a solution having such concentration of 0 % (for CASE B-7) were prepared.
(2) HCl having a normality of 1 N was dropped in the solutions for CASE B-5 to B-7 prepared in (1), and a regenerating solutions having pH adjusted to 3 were prepared.
(3) Hydrotalcite-like substances after the adsorbing test and adsorbing boron were added in the solutions prepared in (1) and (2) by what corresponds to 1.0 g (1.0 wt%) in a dried and solid content conversion, and the solutions were stirred by a magnetic stirrer for 3 0 min.
(4) During stirring, HCl having a normality of 1 N was dropped into the solutions for CASE 5 and CASE6 to adjust pH of the solutions between 3.0 and 5.0. Moreover, no HCl was dropped into the solutions for CASE B-7 to B-9 during stirring, only any effect by only initial pH was checked.
(5) After stirred, the solutions were subjected to solid-liquid separation, the boron concentrations of respective filtrates were measured by an ICP emission spectrophotometer (CIROS CCD made by RIGAKU) and respective pHs were measured by an pH electrode, thereby calculating the desorption amount of boron from the hydrotalcite-like substances.

Table 7 shows a result of replacing the hydrotalcite-like substances adsorbing boron.

**[Table 7]**

| CASE | NaCl concentration (%) | pH | | Boron concentration (mg/L) | Desorption amount (mg/g) | Desorption ratio (%) |
|---|---|---|---|---|---|---|
| | | Initial solution | Filtrate | | | |
| B-5 | 25 | 3.00 | 3.88 | 18.3 | 1.83 | 102.4 |
| B-6 | 5 | 3.09 | 4.28 | 18.6 | 1.86 | 104.1 |
| B-7 | 0 | 3.07 | 6.62 | 2.53 | 0.253 | 14.2 |
| B-8 | 25 | 8.06 | 9.83 | 14.5 | 1.45 | 83.5 |
| B-9 | 5 | 7.65 | 9.61 | 12.5 | 1.25 | 72.0 |

As is shown in table 7, in the cases of CASE B-7 where the amount of positive ions (hydrogen ions) only was large and substituent negative ions (chloride ions) were little and CASE B-8 and CASE B-9 where the substituent negative ions (chloride ions) were large but the positive ions (hydrogen ions) were little, the desorption ratio of boron was low. Conversely, in the cases of CASE B-5 and CASE B-6 where sufficient substituent negative ions (chloride ions) were present and the amount of positive ions (hydrogen ions) was adjusted so as to facilitate desorption of interlayer negative ions, the desorption ratio of boron became 100 %.

### <Re-adsorbing Test>

Using hydrotalcite-like substances (CASE B-5 and B-6 in table 7) having undergone boron desorption and regenerated to a chlorinated type, an re-adsorbing test of boron was carried out through following procedures.
(1) Hydrotalcite-like substances regenerated to a chlorinated type, having undergone solid-liquid separation and collected were rinsed well by distilled water, contained sodium chloride was eliminated and the hydrotalcite-like substances were subjected to sold-liquid separation again.
(2) The collected hydrotalcite-like substances were put in a drying furnace set to 100 °C±5°C and dried for equal to 12 hours or longer, and used as a sample for re-adsorbing test. The sample for re-adsorbing test was kept in a sealed container.
(3) The scheme of the re-adsorbing test was carried out through the same scheme of the first example (method of producing adsorbing sample). Note that the solution concentration of boron for the re-adsorbing test was set to 20.5 mg/L. Table 8 shows the result. Note that a regenerating rate was acquired on percentage from the adsorption amount of boron by hydrotalcite-like substances after regeneration with reference to the boron adsorbing amount of hydrotalcite-like substances before adsorption which was 1.58 mg/g.

**[Table 8]**

| CASE | NLDH added amount | Solution amount | Solution concentration (mg/L) | Adsorbing amount (mg/g) | Regeneration rate (%) |
|---|---|---|---|---|---|
| | g | ml | | | |
| B-5 | 0.685 | 68.5 | 5.02 | 1.55 | 98.0 |
| B-6 | 0.819 | 81.9 | 5.08 | 1.54 | 97.6 |

As is clear from the result shown in table 8, hydrotalcite-like substances adsorbing boron had a boron adsorbing capacity which was regenerated almost 100 % by a sodium chloride solution having pH adjusted.

As explained above, as the amount of positive ions which chemically-react with at least either one of the interlayer negative ions or the substituent negative ions is adjusted, the desorption amount of the interlayer negative ions of hydrotalcite-like substances can be increased, and the regeneration rate of the hydrotalcite-like substances can be improved.

Next, an explanation will be given of an interlayer ion replacing apparatus of the present invention.

The interlayer ion replacing apparatus of the present invention replaces the interlayer negative ions of hydrotalcite-like substances in a solution with substituent negative ions, and mainly comprises a mixing tank for mixing the hydrotalcite-like substances with the substituent negative ions, and positive ion adjusting means for adjusting the amount of the positive ions which chemically-react with at least either the interlayer negative ions or the substituent positive ions in the mixing tank.

The mixing tank is not limited to any particular one as far as it is formed of a substance other than a substance which reacts with a solution supplied in the mixing tank, and for example, formed of a resin, such as polymethylmethacrylate (PMMA) or vinyl chloride, a metal, a wood, etc..

An example positive ion adjusting means comprises equal to one or greater number of reservoir tank retaining positive ions and negative ions which chemically-react with the positive ions, supply means like a pump which supplies the positive ions in the reservoir tank to the mixing tank, and mixing means like a mixer or a magnetic stirrer which mixes hydrotalcite-like substances with the positive ions.

For example, when the positive ions are hydrogen ions, an acid solution or a basic solution is retained in the reservoir tank, and is supplied to hydrotalcite-like substances by the pump by what corresponds to a predetermined amount, and is mixed with the hydrotalcite-like substances by the mixer to adjust the hydrogen ion concentration.

The interlayer ion replacing apparatus having the foregoing structure can appropriately replace the interlayer negative ions of hydrotalcite-like substances.

## Claims

1. An interlayer ion replacing method which replaces an interlayer negative ion of a hydrotalcite-like substance in a solution containing a substituent negative ion, comprising:
a positive ion adjusting step of increasing an amount of positive ion which chemically-reacts with the interlayer negative ion in the solution.

2. An interlayer ion replacing method which replaces an interlayer negative ion of a hydrotalcite-like substance in a solution containing a substituent negative ion, comprising:
a positive ion adjusting step of decreasing an amount of positive ion which chemically-reacts with the substituent negative ion in the solution.

3. An interlayer ion replacing method which replaces an interlayer negative ion of a hydrotalcite-like substance in a solution containing a substituent negative ion, comprising:
a positive ion adjusting step of adjusting an amount of positive ion which chemically-reacts with both of the interlayer negative ion and the substituent negative ion in the solution so that a desorption amount of the interlayer negative ion increases.

4. The interlayer ion replacing method according to any one of claims 1 to 3, wherein the hydrotalcite-like substance has a crystallite size of equal to 20 nm or smaller.

5. The interlayer ion replacing method according to any one of claims 1 to 3, wherein the positive ion is a hydrogen ion.

6. The interlayer ion replacing method according to any one of claims 1 to 3, wherein the substituent negative ion has a higher affinity with the hydrotalcite-like substance than an affinity of the interlayer negative ion.

7. The interlayer ion replacing method according to any one of claims 1 to 3, wherein the substituent negative ion is a carbonate ion or a chloride ion.

8. The interlayer ion replacing method according to any one of claims 1 to 3, wherein the hydrotalcite-like substance is kept in a moistening condition after adsorbing the interlayer negative ion until replaced with the substituent negative ion.

9. A regenerating method of replacing an interlayer negative ion of a hydrotalcite-like substance with a substituent negative ion to regenerate the hydrotalcite-like substance, comprising steps of:
replacing the interlayer negative ion of the hydrotalcite-like substance with a carbonate ion through the interlayer ion replacing method according to any one of claims 1 to 3; and
replacing the carbonate ion with a chloride ion in a sodium chloride solution having pH between equal to 3 or higher and equal to 7 or lower.

10. A regenerating method of a hydrotalcite-like substance comprising a step of replacing an interlayer negative ion of the hydrotalcite-like substance with a chloride ion in a sodium chloride solution having pH between equal to 3 or higher and equal to 7 or lower.

11. An interlayer ion replacing apparatus which replaces an interlayer negative ion of a hydrotalcite-like substance with a substituent negative ion in a solution, comprising:
positive ion adjusting means for adjusting an amount of positive ion which chemically-reacts with at least either one of the interlayer negative ion or the substituent negative ion.

12. The interlayer ion replacing apparatus according to claim 11, wherein the positive ion adjusting means adjusts a concentration of hydrogen ion.
